# EUROPÄISCHE PATENTSCHRIFT

(11) **EP 0 752 386 B1**
(45) Veröffentlichungstag und Bekanntmachung des Hinweises auf die Patenterteilung: **13.04.2005**
(21) Anmeldenummer: 96109308.5
(22) Anmeldetag: 11.06.1996
(51) Int. Cl.: B66C 23/42, B60P 3/12, B60P 3/14

(54) **Vorrichtung mit einer Bergeeinheit**
Device with a rescue unit
Dispositif avec une unité de sauvetage

(30) Priorität: 05.07.1995 DE 29510875 U
(43) Veröffentlichungstag der Anmeldung: 08.01.1997
(73) Patentinhaber: ROTZLER GMBH & CO. KG, 79585 Steinen (DE)
(72) Erfinder: Rotzler, Jürgen, Dipl.-Ing., 79585 Steinen (DE)
(74) Vertreter: Wasmuth, Rolf, Dipl.-Ing.

(56) Entgegenhaltungen:
- EP-A- 0 153 187
- EP-A- 0 229 964
- DE-U- 9 317 321
- GB-A- 2 110 171
- US-A- 4 294 176
- US-A- 4 383 792

## Beschreibung

Die Erfindung betrifft eine Vorrichtung mit einer Bergeeinheit zum Bergen und Schleppen von Lasten nach dem Oberbegriff des Anspruches 1.

Eine derartige Bergevorrichtung ist aus der US 4 515 282 bekannt. Auf der Auflagefläche eines Nutzfahrzeuges ist ein Arbeitskran angeordnet, an dessen Schwenkarm ein Zugseil geführt ist. Diese Bergevorrichtung wird für Rettungsarbeiten und zum Abschleppen von Fahrzeugen sowie zum Bergen und Heranziehen von Gegenständen aller Art genutzt. Diese Vorrichtung hat den Nachteil, daß ein Transport der Bergevorrichtung nur mit dem speziell dafür ausgebauten Nutzfahrzeug möglich ist. Es ist daher die Anschaffung eines teuren Nutzfahrzeugs notwendig, welches für anderweitige Zwecke nicht eingesetzt werden kann. Ein Transport mit anderen Verkehrsmitteln, beispielsweise ein schienengebundener Transport, ist dagegen nicht möglich.

Der Erfindung liegt die Aufgabe zugrunde, die Bergevorrichtung derart auszubilden, daß ein schneller und sicherer Transport der Vorrichtung mit verschiedenen Transportmitteln möglich ist.

Diese Aufgabe wird erfindungsgemäß mit den Merkmalen des Anspruches 1 gelöst.

Der Grundrahmen mit der darauf montierten Bergeeinheit kann auf die Auflagefläche von beliebigen Nutzfahrzeugen aufgesetzt werden, wobei keine besonderen Umbaumaßnahmen am Nutzfahrzeug notwendig sind. Der Grundrahmen kann auch auf der Auflagefläche von anderen Fahrzeugen transportiert werden, beispielsweise auf der Auflagefläche von Güterwaggons. Die Bergevorrichtung kann mit den üblichen Verkehrsmitteln über große Strecken transportiert werden und am Einsatzort in bekannter Weise auf die Auflagefläche eines Nutzfahrzeuges aufgesetzt und in Betrieb genommen werden.

Der Grundrahmen ist zweckmäßig fest auf der Auflagefläche des Fahrzeuges gehalten, so daß zum einen ein sicherer Transport zum Einsatzort gegeben ist und andererseits hohe Kräfte im Berge- bzw. Schleppbetrieb der Vorrichtung über den Grundrahmen auf die Auflagefläche des Fahrzeugs übertragen werden können.

Die Bergeeinheit umfaßt vorteilhaft eine oder mehrere verschiedene Komponenten, beispielsweise einen Kran, eine Seilwinde mit Zugseil, einen Hebegalgen, einen Antriebsmotor und verschiedenartiges Werkzeug. Die Komponenten sind austauschbar auf dem Grundrahmen montiert und werden je nach Einsatzzweck und Anwendung zusammengestellt.

Weitere Merkmale, Vorteile und Ausgestaltungen der Erfindung sind den weiteren Ansprüchen, der nachfolgenden Beschreibung und den Zeichnungen zu entnehmen. Es zeigen:
- Fig. 1: die Bergevorrichtung auf der Auflagefläche eines Nutzfahrzeugs in Seitenansicht,
- Fig. 2: die Bergevorrichtung nach Fig. 1 in Draufsicht,
- Fig. 3: die Bergevorrichtung in einer weiteren Ausführung in Seitenansicht,
- Fig. 4: die Bergevorrichtung nach Fig. 3 in Draufsicht,
- Fig. 5: die Bergevorrichtung in noch einer weiteren Ausführung in Seitenansicht,
- Fig. 6: die Bergevorrichtung nach Fig. 5 in Draufsicht.

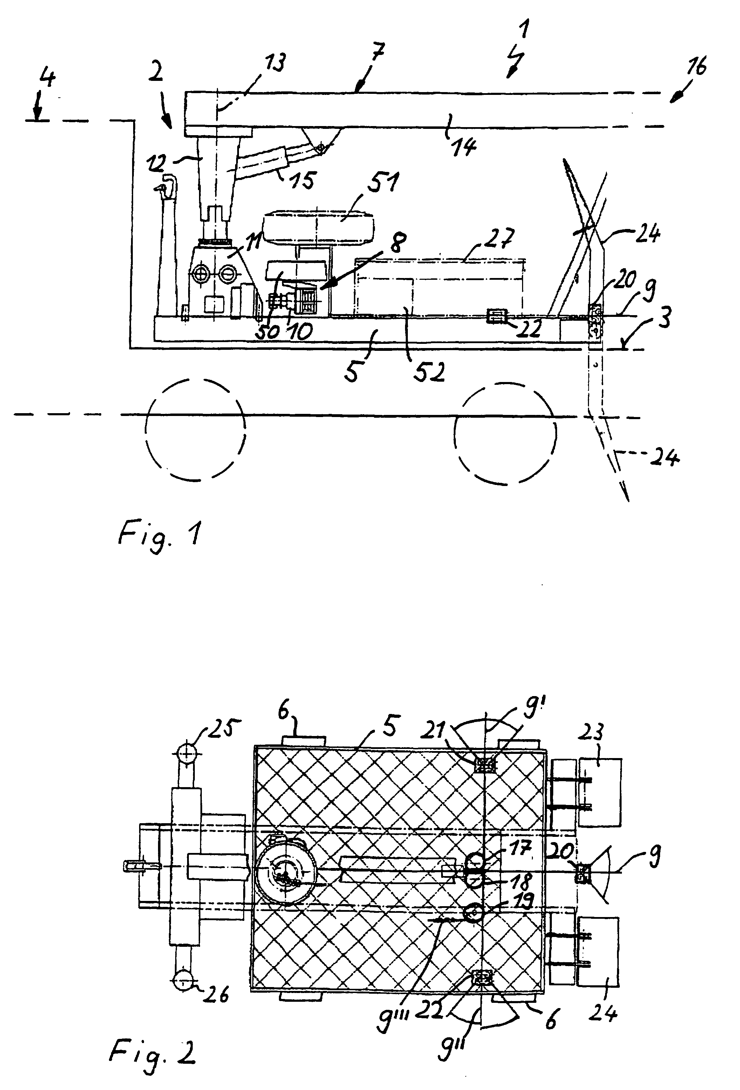

Fig. 1 zeigt eine Bergevorrichtung bzw. Bergekit 1 mit einer rahmenförmigen Pritsche bzw. einem Grundrahmen 5, auf dem eine Bergeeinheit 2 montiert ist, welche aus verschiedenen Systemkomponenten besteht. Der Grundrahmen 5 ist auf die Auflagefläche 3 eines Fahrzeuges 4, im Ausführungsbeispiel eines Nutzfahrzeuges, aufgesetzt und wird gemäß Fig. 2 über Befestigungsvorrichtungen 6 auf der Auflagefläche 3 gehalten. Die Befestigungsvorrichtungen 6 zur Sicherung der Bergevorrichtung auf der Auflagefläche können in Form von Klammern, Bolzen, Schrauben oder ähnliches ausgebildet sein. Die Befestigungsvorrichtungen 6 gewährleisten, daß die Bergevorrichtung 1 während des Transportes sicher auf dem Nutzfahrzeug gehalten wird und daß im Bergebetrieb von der Bergeeinheit 2 aufgenommene Kräfte, die quer zur Auflagefläche wirken, auf das Nutzfahrzeug übertragen werden können, ohne daß der Grundrahmen verrutscht oder kippt. Vorzugsweise wird als Nutzfahrzeug ein Abrollkipper eingesetzt.

Der Grundrahmen 5 ist als Wechselpritsche ausgelegt, die auf die Ladefläche herkömmlicher Fahrzeuge aufgesetzt werden kann. Der Grundrahmen 5 kann mit der darauf montierten Bergeeinheit 2 problemlos von der Auflagefläche eines Nutzfahrzeuges auf die Auflagefläche eines weiteren Fahrzeuges umgeladen werden.

Die auf dem Grundrahmen 5 aufmontierte Bergeeinheit 2 besteht im Ausführungsbeispiel gemäß Fig. 1 und 2 aus einem Schwenkkran 7, der als schwerer Arbeitskran zum Heben großer Lasten ausgebildet ist. Weiterhin ist eine Seilwinde 8 vorgesehen, auf deren Speichertrommel 50 ein Zugseil 9 auf- bzw. abwickelbar ist und die von einem Windenmotor 10, vorzugsweise ein Verbrennungsmotor, angetrieben wird.

Der Schwenkkran 7 besteht aus einem auf dem Grundrahmen 5 montierten Sockel 11, auf dem ein Fuß 12 des Schwenkkrans drehbar um die vertikale Schwenkachse 13 gelagert ist. An dem Fuß 12 stützt sich ein horizontaler Schwenkarm 14 ab, der über einen Hydraulikzylinder 15 zwischen Schwenkarm und Fuß vertikal verschwenkbar ist und der durch ein internes Antriebssystem betrieben ist. Zweckmäßig bezieht der Schwenkkran seine Energie zur Ausführung der Arbeitsbewegungen von einem Antriebsmotor 52, der vorteilhaft als Verbrennungsmotor ausgeführt ist. Die Länge des Schwenkarms 14 ist so bemessen, daß das freie Ende 16 des Schwenkarms 14 über den hinteren Rand des Grundrahmens 5 hinausragt. Der Schwenkarm 14 kann hierfür hydraulisch ausfahrbar gestaltet sein.

Weiterhin ist auf dem Grundrahmen ein Ersatzrad 51 mitgeführt.

Das Zugseil 9 der Seilwinde 8 ist gemäß Fig. 2 zwischen Führungsrollen 17, 18, welche auf der Oberfläche des Grundrahmens befestigt sein können, hindurchgeführt und im weiteren Verlauf durch ein Seilführungsteil 20 am hinteren Ende des Grundrahmens geführt; das Seilführungsteil 20 erlaubt eine seitliche und eine vertikale Auslenkung des Zugseiles von jeweils etwa 45°. Die Führungsrollen 17, 18 können auch als Umlenkrollen eingesetzt werden, um das Zugseil über jeweils eine Seite des Grundrahmens 5 hinauszuführen. Nach Umlenkung des Zugseiles um die Rolle 17 ist das Seil 9' durch ein seitlich angeordnetes Seilführungsteil 21 geführt, das etwa den gleichen Führungswinkel erlaubt wie das Seilführungsteil 20 am hinteren Ende des Grundrahmens. In gleicher Weise kann das Zugseil auch um die Rolle 18 zur gegenüberliegenden Seite des Grundrahmens durch ein weiteres Seilführungsteil 22 geführt sein, siehe Bezugszeichen 9''. Alternativ kann das Zugseil nach Umlenkung um die Rolle 18 um eine weitere Umlenkrolle 19 geführt werden, so daß das Zugseil insgesamt um etwa 180° umgelenkt wird, siehe Bezugszeichen 9'''.

Das Zugseil 9 kann auch über den Schwenkarm 14 des Schwenkkrans 7 zum freien Ende 16 geführt werden, um Lasten bzw. abzuschleppende Fahrzeuge anzuheben. Alternativ oder zusätzlich kann am Schwenkkran 7 eine weitere Seilwinde mit einem weiteren Zugseil vorgesehen sein.

Die Seilwinde 8 ist vorteilhaft mittig auf dem Grundrahmen 5 angeordnet; entsprechend verläuft das Zugseil 9 etwa parallel zur Längsmittelachse des Grundrahmens, um Kippmomente im Bergebetrieb zu vermeiden.

Am hinteren Ende des Grundrahmens 5 sind zwei Erdspaten 23, 24 vorgesehen, die um eine Querachse nach unten verschwenkbar sind und sich insbesondere beim Bergebetrieb auf weichem Untergrund zur Abstützung der Bergevorrichtung 1 in das Erdreich eingraben können. Die Erdspaten sind symmetrisch zur Längsmittelachse des Grundrahmens 5 angeordnet; das Zugseil 9 ist durch den Zwischenraum zwischen den beiden Erdspaten hindurchgeführt.

Auf der den Erdspaten gegenüberliegenden Seite sind Stützen 25, 26 angeordnet, die seitlich ausfahrbar sind und über die der Grundrahmen auf dem Boden abstützbar ist.

Auf dem Grundrahmen können außerdem Werkzeugbehälter 27 zur Aufnahme von diversem Werkzeug vorgesehen sein.

Wie Fig. 2 zu entnehmen, ist die Oberfläche des Grundrahmens 5 mit einer Rasterung versehen, in welche die einzelnen Bergekomponenten sicher einsetzbar und verankerbar sind. Die Rasterung kann in Form von Vertiefungen und/oder Schraubenlöchern zur Aufnahme von Haltebolzen ausgebildet sein. Durch ein feines Maß der Rasterung können die Bergekomponenten an praktisch jeder Stelle des Grundrahmens montiert werden. Die Montage bzw. die Demontage einzelner Bergekomponenten erfolgt in schneller und einfacher Weise, so daß die Werkzeuge und Arbeitsgeräte für den jeweiligen Einsatzzweck angepaßt zusammengestellt werden können.

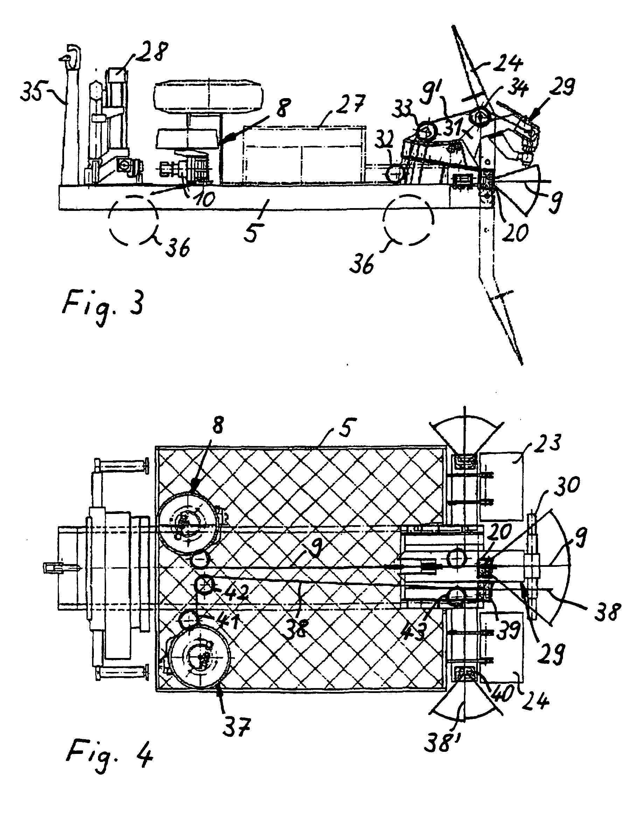

In den Fig. 3 und 4 ist ein weiteres Ausführungsbeispiel gezeigt. Auf dem Grundrahmen 5 ist neben dem Werkzeugbehälter 27 die von dem Windenmotor 10 betriebene Seilwinde 8 angeordnet, deren Zugseil 9 über den hinteren Bereich des Grundrahmens durch das Seilführungsteil 20 geführt ist. Ebenfalls am hinteren Bereich des Grundrahmens 5 ist, zwischen den Erdspaten 23, 24, eine Abschleppvorrichtung 29 angeordnet, deren Schlepparm 31 um eine Querachse vertikal absenkbar ist. Am Schlepparm 31 ist ein Hebegalgen 30 angeordnet, Fig. 4, über den das abzuschleppende Fahrzeug angehoben wird. Die Abschleppvorrichtung 29 kann entweder hydraulisch abgesenkt bzw. angehoben werden, oder, wie in Fig. 3 und 4 gezeigt, mittels des von der Seilwinde 8 betriebenen Zugseiles 9' verschwenkt werden, das hierfür um Umlenkrollen 32, 33, 34 umgelenkt wird und am Schlepparm 31 befestigt wird.

Der Seilwinde 8 benachbart ist ein Ladekran 28 auf dem Grundrahmen 5 befestigt, welcher zum Be- und Entladen von Komponenten eingesetzt werden kann, die auf dem Grundrahmen mitgeführt werden. Der Ladekran 28 wird auch zum Entladen des zu bergenden Fahrzeugs eingesetzt; er findet außerdem Verwendung bei der Montage bzw. Demontage der Bergekomponenten. Der Ladekran 28 kann seine Energie vom Antriebsmotor 52 beziehen.

Die Bergevorrichtung kann auch als Anhänger an eine Zugmaschine angehängt werden. Hierfür ist auf dem Grundrahmen 5 eine Deichsel 35 vorgesehen, die um eine Querachse vertikal verschwenkbar ist und über die der Grundrahmen an die Zugmaschine angekuppelt wird. Auf der Unterseite des Grundrahmens sind abnehmbare Räder 36 vorgesehen, die hilfsweise von dem Antriebsmotor 52 betrieben werden können, so daß die Bergevorrichtung als selbständiges Fahrzeug eigenständige Fahrbewegungen durchführen kann. Der Aktionsradius wird hierdurch unabhängig von der Verfügbarkeit einer Zugmaschine deutlich vergrößert.

Der Draufsicht der Fig. 4 ist zu entnehmen, daß neben der Seilwinde 8 eine zweite Seilwinde 37 mit einem eigenen Zugseil 38 auf dem Grundrahmen 5 angeordnet ist. Die zweite Seilwinde 37 ist am seitlichen Rand des Grundrahmens 5 montiert, wobei das Zugseil 38 über Umlenkrollen 41, 42, 43 etwa parallel zum Zugseil 9 der ersten Seilwinde 8 über die Oberfläche des Grundrahmens 5 zum hinteren Rand des Grundrahmens geführt ist. Das Zugseil 38 kann entweder zwischen den Erdspaten 23, 24 durch ein Seilführungsteil 39 geführt sein oder, wie mit Bezugszeichen 38' dargestellt, um 90° um die Umlenkrolle 43 zum seitlichen Rand des Grundrahmens durch ein weiteres Seilführungsteil 40 geführt sein.

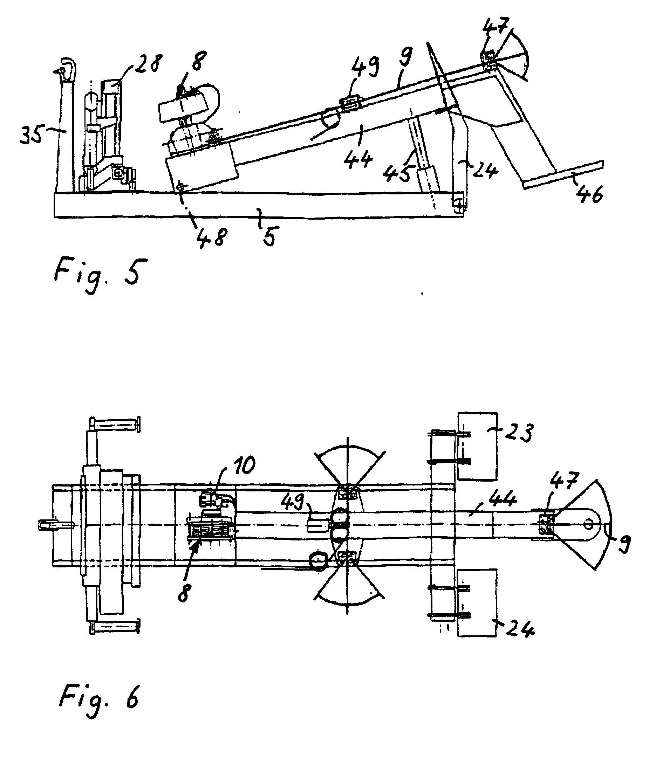

In den Fig. 5 und 6 ist ein drittes Ausführungsbeispiel dargestellt. Im vorderen Bereich des Grundrahmens 5 ist hinter der Deichsel 35 der Ladekran 28 angeordnet, im hinteren Bereich des Grundrahmens sind die Erdspaten 23, 24 befestigt. Weiterhin ist auf dem Grundrahmen ein Ausleger 44 angeordnet, der mit Hilfe eines auf dem Grundrahmen befestigten Hydraulikzylinders 45 um eine Querachse 48 vertikal verschwenkbar ist. Am Ausleger 44 ist eine Hebevorrichtung 46 montiert, mit der ein abzuschleppendes Fahrzeug angehoben werden kann.

Auf der Oberseite des Auslegers 44 ist die Seilwinde 8 gemeinsam mit dem Antriebsmotor 10 angeordnet, wobei das Zugseil 9 der Seilwinde 8 über die Länge des Auslegers 44 auf dessen Oberseite durch Seilführungsteile 47, 49 geführt ist. Bei dieser raumsparenden Anordnung der Seilwinde 8 auf dem Ausleger 44 verbleibt zusätzlicher Einbauraum auf dem Grundrahmen 5 für weitere Komponenten, beispielsweise ein Generator zur Spannungsversorgung.

Das Zugseil 9 kann gemäß Fig. 6 entweder über die gesamte Länge des Auslegers 4 zwischen den Erdspaten 23, 24 nach hinten geführt sein oder seitlich über Umlenkrollen nach links und rechts über den seitlichen Rand des Grundrahmens bzw. über eine weitere Umlenkrolle um 180° zurückgeführt sein.

Durch die Anordnung des Grundrahmens auf der Auflagefläche eines Fahrzeuges wird das Gewicht der Bergekomponenten gleichmäßig auf der Auflagefläche verteilt, so daß die maximalen Achslasten des Fahrzeuges nicht überschritten werden.

Durch die Kombination mehrerer Seilwinden ist man in der Lage, eine größere Zugkraft auf das abzuschleppende Fahrzeug aufzubringen bzw. eine kontrollierte Führung der heranzuziehenden Last zu erreichen. In einer weiteren Anwendung kann mit einer Seilwinde das die Bergevorrichtung tragende Fahrzeug gegen Rutschen gesichert werden, während die zweite Seilwinde für das Heranziehen der Last eingesetzt wird.

Die Seilführungsteile erlauben ein Führen des Zugseils über alle Seiten des Grundkörpers hinaus unter jedem beliebigen Winkel.

Auf dem Grundrahmen kann eine umlaufende Reling geführt sein, die zur Sicherung der auf dem Grundkörper arbeitenden Bedienungspersonen dient. Weiterhin kann eine Leiter auf der Bergevorrichtung mitgeführt werden.

Für den Betrieb mitgeführter Werkzeuge und Lampen sind Hydraulik- und Stromanschlüsse vorgesehen, wobei der Strom von einem vom Antriebsmotor betriebenen Generator geliefert wird.

## Patentansprüche

1. Vorrichtung zum Bergen und Schleppen von Lasten, vorgesehen für die Anordnung-auf einer Auflagefläche eines Nutzfahrzeuges, mit einer Bergeeinheit (2) bestehend aus mehreren Komponenten, nämlich Kran (7, 28), Seilwinde (8) mit Zugseil (9), Hebegalgen (30) und einem Antriebsmotor (52), wobei die Bergeeinheit (2) auf einem Grundrahmen (5) montiert ist, und der Grundrahmen (5) mit der montierten Bergeeinheit (2) als Gesamteinheit auswechselbar auf der Auflagefläche des Fahrzeugs aufsetzbar ist.

2. Vorrichtung nach Anspruch 1,
**dadurch gekennzeichnet, daß** der Grundrahmen (5) über eine Befestigungsvorrichtung (6) auf der Auflagefläche (3) des Fahrzeugs (4) gehalten ist.

3. Vorrichtung nach Anspruch 1 oder 2,
**dadurch gekennzeichnet, daß** die Bergeeinheit (2) austauschbar auf dem Grundrahmen (5) montiert ist.

4. Vorrichtung nach Anspruch 3,
**dadurch gekennzeichnet, daß** zumindest zwei Seilwinden (8, 37) vorgesehen sind, die nebeneinander auf dem Grundrahmen (5) angeordnet sind.

5. Vorrichtung nach Anspruch 4,
**dadurch gekennzeichnet, daß** die Zugseile (9, 38) der Seilwinden (8, 37) im Bereich des Grundrahmens (5) etwa parallel zueinander geführt sind.

6. Vorrichtung nach einem der Ansprüche 3 bis 5,
**dadurch gekennzeichnet, daß** auf dem Grundrahmen (5) ein vertikal verschwenkbarer Ausleger (44) vorgesehen ist, an dessen freiem Ende eine Hebevorrichtung (46) angeordnet ist.

7. Vorrichtung nach Anspruch 6,
**dadurch gekennzeichnet, daß** das Zugseil (9) der Seilwinde (8) entlang des Auslegers (44) geführt ist.

8. Vorrichtung nach Anspruch 6 oder 7,
**dadurch gekennzeichnet, daß** die Seilwinde (8) am Ausleger (44) befestigt ist.

9. Vorrichtung nach einem der Ansprüche 1 bis 8,
**dadurch gekennzeichnet, daß** an dem Grundrahmen (5) Räder (36) befestigbar sind, die vorzugsweise von dem auf dem Grundrahmen (5) mitgeführten Antriebsmotor (52) antreibbar sind.

## Claims

1. Device for recovering and hauling loads provided for installation on a mounting surface of a commercial vehicle, with a recovery unit (2) comprising several components, i.e. crane (7, 28), rope winch (8) with hauling rope (9), lifting boom (30) and drive motor (52), wherein the recovery unit (2) is mounted on a base frame (5) and the base frame (5) with the mounted recovery unit (2) can be exchanged and mounted on the mounting surface of the vehicle as a complete assembly.

2. Device according to claim 1,
**characterised in that** the base frame (5) is retained on the mounting surface (3) of the vehicle (4) by a fastening device (6).

3. Device according to claim 1 or 2,
**characterised in that** the recovery unit (2) is exchangeably mounted on the base frame (5).

4. Device according to claim 3,
**characterised in that** at least two rope winches (8, 37) arranged adjacent to one another on the base frame (5) are provided.

5. Device according to claim 4,
**characterised in that** the hauling ropes (9, 38) of the rope winches (8, 37) are guided approximately parallel to one another in the region of the base frame (5).

6. Device according to any of claims 3 to 5,
**characterised in that** a vertically swivelling boom (44) is provided on the base frame (5), its free end supporting a lifting gear (46).

7. Device according to claim 6,
**characterised in that** the hauling rope (9) of the rope winch (8) is guided along the boom (44).

8. Device according to claim 6 or 7,
**characterised in that** the rope winch (8) is attached to the boom (44).

9. Device according to any of claims 1 to 8,
**characterised in that** wheels (36) preferably driven by the drive motor (52) carried on the base frame (5) can be attached to the base frame (5).

## Revendications

1. Dispositif de renflouage et de remorquage de charges, prévu pour l'agencement sur une surface d'appui d'un véhicule utilitaire, comprenant une unité de renflouage (2) comportant plusieurs composants, à savoir une grue (7, 28), un treuil à câble (8) comprenant un câble de traction (9), une potence de levage (30) et un moteur d'entraînement (52), où l'unité de renflouage (2) est montée sur un bâti de base (5), et le bâti de base (5), avec l'unité de renflouage montée (2), peut être monté de façon amovible, comme unité d'ensemble, sur la surface d'appui du véhicule.

2. Dispositif selon la revendication 1, **caractérisé en ce que** le bâti de base (5) est maintenu, sur la surface d'appui (3) du véhicule (4), par un dispositif de fixation (6).

3. Dispositif selon la revendication 1 ou 2, **caractérisé en ce que** l'unité de renflouage (2) est montée de façon amovible sur le bâti de base (5).

4. Dispositif selon la revendication 3, **caractérisé en ce qu'**il est prévu au moins deux treuils à câble (8, 37) qui sont disposés l'un à côté de l'autre sur le bâti de base (5).

5. Dispositif selon la revendication 4, **caractérisé en ce que** les câbles de traction (9, 38) des treuils à câble (8, 37) sont guidés l'un par rapport à l'autre, de manière à peu près parallèle, dans la zone du bâti de base (5).

6. Dispositif selon l'une quelconque des revendications 3 à 5, **caractérisé en ce qu'**il est prévu, sur le bâti de base (5), une flèche (44) pouvant pivoter verticalement, flèche sur l'extrémité libre de laquelle est disposé un dispositif de levage (46).

7. Dispositif selon la revendication 6, **caractérisé en ce que** le câble de traction (9) du treuil à câble (8) est guidé le long de la flèche (44).

8. Dispositif selon la revendication 6 ou 7, **caractérisé en ce que** le treuil à câble (8) est fixé sur la flèche (44).

9. Dispositif selon l'une quelconque des revendications 1 à 8, **caractérisé en ce que** des roues (36) peuvent être fixées sur le bâti de base (5), lesquelles roues peuvent être entraînées, de préférence, par le moteur d'entraînement (52) guidé sur le bâti de base (5).
